**Europäisches Patentamt**

**European Patent Office**

**Office européen des brevets**

(19)

(11) Publication number: **0 129 989**
**A1**

(12) # EUROPEAN PATENT APPLICATION

(21) Application number: **84303649.2**

(22) Date of filing: **31.05.84**

(51) Int. Cl.⁴: **B 62 D 31/04**

(30) Priority: **01.06.83 GB 8315089**

(43) Date of publication of application:
**02.01.85 Bulletin 85/1**

(84) Designated Contracting States:
**BE CH DE FR IT LI LU NL SE**

(71) Applicant: **MALLINSON-DENNY (LYDNEY) LIMITED**
**Pine End Works**
**Lydney Gloucestershire(GB)**

(72) Inventor: **Halpin, Gerard Walter**
**10 Chatsworth Park**
**Thornbury North Avon Bristol(GB)**

(74) Representative: **Woodward, John Calvin et al,**
**VENNER SHIPLEY & CO. 368 City Road**
**London EC1V 2QA(GB)**

(54) **Improvements in bus deck floors.**

(57) Bus deck flooring for the floor (10) of the upper deck of a double decker bus, comprises a metal, preferably aluminium, hollow sectioned core (18) carrying an upper tread surface (24) and a lower ceiling surface (25), is prestressed into an upwardly convex curve, the flooring being of a substantially uniform shape from front to rear. The flooring can be fixed to brackets on side walls of the bus, and can be supported solely by these brackets, without the need for support intermediate the bus side walls.

FIG.1

FIG.2

EP 0 129 989 A1

Croydon Printing Company Ltd.

"Improvements in Bus Deck Floors"

## FIELD OF THE INVENTION

This invention relates to a bus deck floor, more especially but not exclusively a floor for the upper deck of a multiple deck bus or coach, e.g. a double decker bus.

## BACKGROUND OF THE INVENTION

A conventional autobus upper deck has a floor in the form of a piece of plywood scarfed to form a board of a desired length, e.g. about 10 or more metres, with a width of about 2 metres up to about 2½ metres. This plywood floor is fixed to a box section aluminium framework which is in turn fixed to the side walls of the bus. The floor is supported in the middle by support rods fixed to the seats of the lower deck. Immediately under the framework is placed a decorative laminate fixed on to a very thin sheet of aluminium. The total thickness of this deck floor is in excess of 50 mm, usually approaching 85 mm.

The present invention provides a simplified on-site floor fixing in an autobus and provides for a reduced floor thickness to enable increased headroom.

## SUMMARY OF THE INVENTION

According to the invention there is provided a bus deck floor comprising a metal follow sectioned core carrying an upper tread surface, said core being prestressed into an upwardly convex curve to enable the floor to be fixed at its sides to bracket means on side walls of the bus without support intermediate the side walls.

In the case of an upper deck floor, the core may also carry on its underside the ceiling finish for the lower deck.

The deck floor can be preformed in lengths of about $1\frac{1}{2}$ metres (5 feet), 3 metres (10 feet) or any other suitable length interlocked on site in the front to rear direction, or alternatively the floor can be preformed in one piece to extend the full length of the bus, being slid in the front/rear direction into the brackets fixed to the side walls of the bus.

According to another aspect of the invention, there is provided a method of forming the deck flooring of an autobus, wherein a metal hollow sectioned core section prestressed into an upwardly convex curve, of substantially uniform shape front to rear, and carrying at least an upper tread surface, is fixed at its lateral edges to brackets fixed to the side walls of the bus so as to be supported solely by said brackets.

BRIEF DESCRIPTION OF THE DRAWINGS

Examples of deck floor in accordance with the invention are shown in the accompanying drawings, wherein:-

Figure 1 shows a curved deck floor supported by brackets on the side walls of a bus;

Figures 2, 3 and 4 and 4A show examples of the core of the deck floor, in cross section front to rear, Figure 4A being a perspective detail;

Figure 5 shows a method of panel interlock; and

Figure 6 shows the floor installed in a double decker bus.

## DESCRIPTION OF PREFERRED EMBODIMENTS

Referring firstly to Figure 6, there is shown a double decker bus having entrance doors 1, a lower seating deck 2 provided with seats 3, an upper seating deck 4 provided with seats 5 and stairs 6 extending between the upper and lower decks. A floor 10, shown in dotted outline is provided for the upper deck, the floor being attached to side walls of the bus.

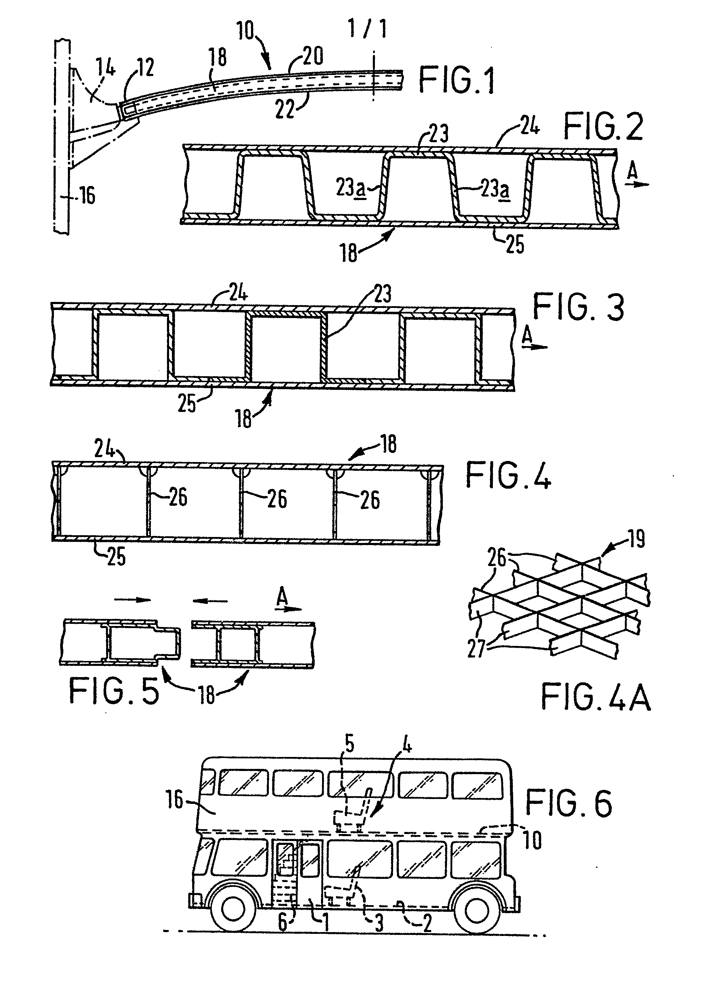

Referring now to Figure 1, the floow 10 is supported at its lateral edges 12 by brackets 14 fixed to the bus side walls 16. The floor requires no support intermediate the bus side walls.

For enabling this form of side edge support, the floor is preformed as an aluminium, hollow sectioned core 18 pre-shaped into an upwardly convex curve, so as to have a uniform cross-sectional shape front to rear, with coverings 20, 22 on its upper convex surface and on its lower concave surface, these coverings constituting the tread surface for the upper deck and the ceiling surface for the lower deck.

Figures 2 to 4 show alternative constructions of the aluminium core 18 of the floor. The arrow 24 indicates the front/rear direction of the bus, so that the core is pre-shaped into a uniformly shaped curve in the direction transverse to the paper.

In Figure 2 the core is formed from a corrugated aluminium sheet 23 sandwiched between upper and lower sheets 24, 25. The sheet 23 has inclined corrugated wall portions 23a. A similar construction is shown in Figure 3 but with a rectangularly corrugated sheet 23.

In the construction of Figures 4 and 4A the core includes hollow rectangular box shaped interstitial spaces defined by interslotted

- 4 -

aluminium webs 25, 26 running at right angles and attached at their edges to sheets 24, 25.

Figures 2 to 4 show the core 18 without its upper tread surface and lower ceiling surface, but these finishes will be applied before the preformed floor is fixed to the brackets on the side walls of the bus. Figure 4A shows the hollow section filling 19 of the core 18 of Figure 4.

The floor can be preformed as a single length to extend the entire length of the bus, in which case it will be slid into the side wall brackets in the front/rear direction.

Alternatively, the floor can be preformed in shorter lengths, which interlock in the front/rear direction in a push fit manner shown in Figure 5, wherein the front and rear edges of the preformed core 18 are of a shape to interengage, so as to define push fit coupling means.

With any of the above described types of prestressed core, the radius, possible of flatter shape in the centre than at the side edges, can be chosen to suit the clearance height that is required for the lower deck of the bus, in particular to enable passengers to walk the centre aisle thereof.

The above-described deck floor has a number of advantages over the conventional floor previously referred to:-

1) it can be factory manufactured using jigs and tools too cumbersome for use in on site assembly

2) it is lighter per unit floor area

3) it is less expensive to produce and install as it can be made as a standard purchasable item

4) it can have a thickness of less than 50 mm, thus enabling increased head room within a bus of given height

5) seat fixing and service facilities can be effected on the floor structure without difficulty.

It will be appreciated that the above-described deck floor constructions shown in the drawings can be modified in various ways within the scope of the invention as claimed hereinafter.

## CLAIMS

1. A bus deck floor comprising a metal hollow sectioned core, carrying an upper tread surface, said core being prestressed into an upwardly convex curve to enable the floor to be fixed at its sides to bracket means on side walls of the bus without support intermediate the side walls.

2. A bus deck floor as claimed in claim 1 including on its underside a ceiling finish for a lower deck.

3. A bus deck floor as claimed in claim 1 and formed in a plurality of interlocking sections.

4. A bus deck floor as claimed in claim 3 including push fit coupling means on side edges of adjacent ones of the interlocking section.

5. A bus deck floor as claimed in claim 1 wherein the core comprises a corrugated sheet sandwiched between first and second metal sheets.

6. A bus deck floor as claimed in claim 1 wherein the core comprising a plurality of webs extending transversely of one another between and transversely of upper and lower sheets.

7. A bus deck floor as claimed in claim 1 wherein the transverse cross-sectioned shape thereof is substantially the same for different positions along the length of the floor.

8. A passenger carrying vehicle provided with a deck comprising a hollow sectioned core carrying an upper tread surface, the core having been pre-stressed into an upwardly convex curve, the floor being fixed at its sides to side walls of the vehicle and without support intermediate the side walls.

9.    A vehicle according to claim 8 comprising a double decker bus and said deck comprising an upper deck for the bus.

10.    A method of forming the deck flooring of an autobus, wherein a metal hollow sectioned core section prestressed into an upwardly convex curve, of substantially uniform shape front to rear, and carrying at least an upper tread surface, is fixed at its lateral edges to brackets fixed to the side walls of the bus so as to be supported solely by said brackets.

FIG.1

FIG.2

FIG. 3

FIG.4

FIG.5

FIG.4A

FIG.6

## European Patent Office

### EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 134 945 (BERLIET) <br> * Page 1, lines 68-88; figures 1-6 * | 2,8,9 | B 62 D 31/04 |
| Y | | 1 | |
| | --- | | |
| Y | US-A-1 521 064 (BALL) <br> * Page 2, lines 18-29; figures 1-7 * | 1 | |
| | --- | | |
| A | DE-A-2 908 823 <br> (MESSERSCHMITT-BÖLKOW-BLOHM) <br> * Page 4, lines 2-10; figure * | 3-7 | |
| | --- | | |
| A | DE-C- 819 946 (WAGGONFABRIK UERDINGEN) | | **TECHNICAL FIELDS SEARCHED (Int. Cl. 3)** |
| | ----- | | B 62 D 25/00 <br> B 62 D 31/00 |

The present search report has been drawn up for all claims

| Place of search <br> BERLIN | Date of completion of the search <br> 23-08-1984 | Examiner <br> LUDWIG H J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82